(19) **Europäisches Patentamt**
**European Patent Office**
**Office européen des brevets**

(11) **EP 2 606 523 B1**

(12) **EUROPEAN PATENT SPECIFICATION**

(45) Date of publication and mention
of the grant of the patent:
**28.09.2016 Bulletin 2016/39**

(21) Application number: **11817783.1**

(22) Date of filing: **16.08.2011**

(51) Int Cl.:
*H01M 4/36* (2006.01)        *H01M 4/04* (2006.01)
*H01M 4/131* (2010.01)       *H01M 4/134* (2010.01)
*H01M 4/1391* (2010.01)      *H01M 4/1395* (2010.01)
*H01M 4/133* (2010.01)       *H01M 4/1393* (2010.01)
*H01M 4/587* (2010.01)       *H01M 10/0525* (2010.01)
*H01M 4/38* (2006.01)

(86) International application number:
**PCT/CN2011/078496**

(87) International publication number:
**WO 2012/022256 (23.02.2012 Gazette 2012/08)**

(54) **METHOD FOR PREPARING NEGATIVE ACTIVE MATERIAL, NEGATIVE ELECTRODE MATERIAL AND LITHIUM ION BATTERY**

VERFAHREN ZUR HERSTELLUNG EINES NEGATIVEN AKTIVMATERIALS, NEGATIVES ELEKTRODENMATERIAL UND LITHIUMIONENBATTERIE

PROCÉDÉ DE PRÉPARATION D'UN MATÉRIAU ACTIF NÉGATIF, D'UN MATÉRIAU POUR ÉLECTRODES NÉGATIVES ET DE PILES LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2010  CN 201010260247**

(43) Date of publication of application:
**26.06.2013  Bulletin 2013/26**

(73) Proprietors:
• **BYD Company Limited**
  **Shenzhen, Guangdong 518118 (CN)**
• **Shenzhen BYD Auto R&D Company Limited**
  **Shenzhen, Guangdong 518118 (CN)**

(72) Inventors:
• **WANG, Qiang**
  **Guangdong 518118 (CN)**

• **ZHANG, Lu**
  **Guangdong 518118 (CN)**
• **MA, Li**
  **Guangdong 518118 (CN)**
• **WU, Zhenyue**
  **Guangdong 518118 (CN)**
• **Zhu,Yan**
  **Shenzhen ,Guangdong 518118 (CN)**

(74) Representative: **Zimmermann, Tankred Klaus Schoppe, Zimmermann, Stöckeler Zinkler, Schenk & Partner mbB Patentanwälte Radlkoferstrasse 2 81373 München (DE)**

(56) References cited:
**CN-A- 101 740 764        CN-C- 1 194 431
CN-C- 100 375 319        US-A- 5 654 114
US-A1- 2002 015 889**

**Description**

<u>FIELD</u>

The present disclosure relates to a method for preparing a negative active material, a negative electrode material comprising the negative active material and a lithium ion battery comprising the negative electrode material.

<u>BACKGROUND</u>

At present, a lithium ion secondary battery has become a main power supply for a mobile communication device and a portable electronic device. Due to high output voltage and high energy density of the lithium ion secondary battery, the lithium ion secondary battery has become a domestic and international research focus.

However, in the lithium ion secondary battery, the existing negative active material for negative electrode may include lithium metal, carbon materials such as coal and graphite, and tin ("Sn") materials, as well as complex oxidations of Sn or Sn-based alloys and graphite. Without wishing to be bound by the theory, inventors believe that Sn negative materials exhibited a relatively higher specific capacity than, for examples, some carbon materials, including graphite materials. For example without wishing to be bound by the theory, the theoretic capacity of metal Sn may be about 994 milliampers per gram ("mAh/g"): the theoretic capacity of SnO may be about 600mAh/g; and the theoretic capacity of $SnO_2$ may be about 777mAh/g. Further, without wishing to be bound by the theory, Sn may produce about 3 times volume change during the charging and discharging cycles, which may cause electrode peeling off, powderizing and further cause drop in capacity and cycling performance.

CN 101 740 764 A describes a tin-graphite composite cathode material for lithium ion battery and a preparation method thereof. The composite material comprises a core-shell structure which is composed of an internal core and an external shell, wherein the internal core is graphite and the external shell is a uniform compound of metal tin and amorphous carbon. In the invention, an organic solvent system, not a common aqueous solution system, is adopted, graphite, metal tin and organic high polymer form a uniform sol-gel system, which does not generate deposit all the time in the material preparation process, thus finally obtaining cathode composite material of lithium ion battery with special core-shell structure.; In the composite material, metal Sn in the C material is highly uniformly dispersed, micro-particles of Sn are not easy to agglomerate, the material structure is stable, and the characteristics of high capacity of metal tin good stability of graphite material are composited, thus efficiently improving charging and discharging performances of the composite material.

<u>SUMMARY</u>

To solve at least one problem existing in the prior art, a method for preparing a negative active material, a negative electrode material comprising the negative active material and a lithium ion battery comprising the negative electrode material are provided, in which the capacity and cycling performance of the lithium ion battery may be improved.

Some embodiments of the present disclosure provide a method for preparing a negative active material, comprising: A) mixing a carbon material, an organic polymer, and an aqueous solution of a Sn-containing compound to obtain a first mixture; B) adding a complexing agent to the first mixture with stirring to obtain a second mixture; C) adding a reducing agent to the second mixture to react and obtain a reaction product; and D) filtering, washing and then drying the reaction product to obtain the negative active material.

In one embodiment of present disclosure, the carbon material is at least one selected from natural graphite, artificial graphite, hard carbon and mesocarbon microbead (MCMB). In an example of present disclosure, the carbon material is graphite.

Meanwhile, some embodiments of the present disclosure provide a negative electrode material, comprising: a binding agent, a conductive agent and the negative active material prepared according to the above method.

Moreover, some embodiments of the present disclosure provide a lithium ion battery, comprising: a shell; an electrode core housed in the shell; a cover board for sealing the shell; and an electrolyte disposed inside the shell. The electrode core comprises a positive electrode plate, a negative electrode plate and a separator disposed between the positive electrode plate and the negative electrode plate. The positive electrode plate comprises a positive current collector and a positive electrode material coated on the positive current collector. The negative electrode plate comprises a negative current collector and the above negative electrode material coated on the negative current collector.

The negative active material (a composite material of the carbon material and at least one of Sn and Sn alloy) prepared according to the method of the present disclosure may have an excellent and well-defined core-shell structure. The core-shell structure comprises a core and a shell, in which the core comprises graphite, and the shell comprises Sn (containing or not containing a first aiding compound and the second aiding compound). After mixed with graphite, the organic polymer is coated uniformly around the graphite, and the complexing agent forms a complex compound with tin ions (containing or not containing a first aiding compound and the second aiding compound) in an aqueous solution of the Sn-containing compound (containing or not containing the first water soluble aiding compound and the second water soluble aiding compound). The complex compound may be uniformly distributed in the organic polymer. After the reducing agent is added, the reducing agent passes into the organic polymer and reacts with the complex compound to form tin (containing or not containing a first aiding compound and the second aiding compound). The tin particles (containing or not containing a first aiding compound and the second aiding compound) bind closely with the graphite through the organic polymer, meanwhile, after sintered, the organic polymer is decomposed into carbon, which may improve the binding force of the tin particles (containing or not containing a first aiding compound and the second aiding compound) on the surface of the graphite to a certain degree. Therefore, the tin particles (containing or not containing a first aiding compound and the second aiding compound) may be uniformly coated around the graphite, and the particle size of the tin particles may be on a nanometer scale. By using the negative active material according to an embodiment of the present disclosure, the capacity and the cycling performance of the battery may be improved significantly.

Additional aspects and advantages of the embodiments of the present disclosure will be given in part in the following descriptions, become apparent in part from the following descriptions, or be learned from the practice of the embodiments of the present disclosure.

## BRIEF DESCRIPTION OF THE DRAWINGS

These and other aspects and advantages of the disclosure will become apparent and more readily appreciated from the following descriptions taken in conjunction with the drawings in which:

Fig. 1a is a 2000-fold magnification SEM image of a negative active material sample A2;
Fig. 1b is a 7000-fold magnification SEM image of the negative active material sample A2;
Fig. 1c is a 20000-fold magnification SEM image of the negative active material sample A2;
Fig. 2a is a 2000-fold magnification SEM image of a negative active material sample B1;
Fig. 2b is a 10000-fold magnification SEM image of the negative active material sample B1;
Fig. 2c is a 50000-fold magnification SEM image of the negative active material sample B1;
Fig. 3a is a 2000-fold magnification SEM image of a negative active material sample C1;
Fig. 3b is a 10000-fold magnification SEM image of the negative active material sample C1;
Fig. 3c is a 50000-fold magnification SEM image of the negative active material sample C1;
Fig. 4 is a particle size distribution diagram of the negative active material sample A2;
Fig. 5 is a particle size distribution diagram of the negative active material sample C1;
Fig. 6 is a particle size distribution diagram of a negative active material sample D1;
Fig. 7 is an EDS graph of the negative active material sample A2;
Fig. 8 is an XRD pattern of the negative active material sample A2;
Fig. 9 is an XRD pattern of the negative active material sample C1;
Fig. 10 is an XRD pattern of the negative active material sample D 1;
Fig. 11 shows a specific capacity testing result of a battery S4;
Fig. 12 shows a cycling performance testing result of the battery S4; and
Fig. 13 shows a cycling performance testing result of a battery DBS1.

## DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure.

The method for preparing the negative active material according to some embodiments of the disclosure comprises the following steps of: A) mixing a carbon material, an organic polymer, and an aqueous solution of a Sn-containing compound to obtain a first mixture; B) adding a complexing agent to the first mixture with stirring to obtain a second mixture; C) adding a reducing agent to the second mixture to react and obtain a reaction product; and D) filtering, washing and then drying the reaction product to obtain the negative active material.

According to the embodiments of the present disclosure, the carbon material may be any carbon material known in the art. In one embodiment of present disclosure, the carbon material is at least one selected from the group consisting of natural graphite, artificial graphite, hard carbon, and mesocarbon microbead (MCMB), in which the natural graphite or artificial graphite is spherical graphite or flake graphite. In one example of present disclosure, the carbon material is graphite, and in one specific example of present disclosure the carbon material is spherical graphite or flake graphite. The organic polymer may be any conventional organic polymer, for example,it may be at least one selected from asphalt, polyoxyethylene-polyoxypropylene-polyoxyethylene (POE-POP-POE (P123)), polyvinylidene fluoride (PVDF) and polytetrafluoroethylene (PTFE). In one example of present disclosure, the organic polymer may be POE-POP-POE (P123). According to one embodiment of the present disclosure, the organic polymer may be in a liquid state from about room temperature to about 100°C.

There are no special limits on the Sn-containing compound, provided that it may be dissolved in water to form an aqueous solution of the Sn-containing compound. In one example of present disclosure, the Sn-containing compound may be at least one selected from stannic sulfate, stannic chloride, stannous sulfate and stannous chloride.

In step A), the method of mixing the carbon material, the organic polymer, and the aqueous solution of the Sn-containing compound can be achieved by directly adding the carbon material and the organic polymer to the aqueous solution of the Sn-containing compound. In one embodiment, to mix the above substances uniformly, the carbon material is firstly mixed with the organic compound to form a mixture and then the mixture is added to the aqueous solution of the Sn-containing compound to form the first mixture.

In the above first mixture, the content of the material may vary in a large range. In one embodiment, in the first mixture, the weight ratio of the carbon material, the organic polymer, and the Sn-containing compound is about (1-4):(0.1-0.4):1, and in a specific example, the weight ratio may be about (1.5-3):(0.15-0.3):1.

After obtaining the above first mixture, the complexing agent may be added to the first mixture with stirring. In one embodiment, a solution of the complexing agent is prepared and added to the first mixture dropwise. The stirring method may be any method, providing that the materials in the first mixture do not precipitate.

The complexing agent can be any complexing agent. In one embodiment, the complexing agent is at least one selected from citric acid, tartaric acid, sodium ethylene diamine tetracetate and sodium succinate. The weight ratio of the complexing agent to the Sn-containing compound may be about (0.8-3):1. And in one embodiment of present disclosure, the weight ratio of the complexing agent to the Sn-containing compound may be about (0.8-2):1.

According to some embodiments of the present disclosure, the reducing agent is added to the first mixture after the addition of the complexing agent. The reducing agent may be any conventional reducing agent. And in one embodiment of present disclosure, the reducing agent is at least one selected from sodium borohydride, acetaldehyde, formaldehyde, and sodium hypophosphite. The weight ratio of the reducing agent to the Sn-containing compound is about (2.7-6):1. And in one embodiment of present disclosure, the weight ratio of the reducing agent to the Sn-containing compound may be about (2.7-5):1. According to some examples of the present disclosure, in order to make the reducing agent react fully, preferably, in step C), after the reducing agent is added, the temperature of the first mixture may be maintained at 70-90°C for about 120-360min. When the reaction is completed, the product may be suction filtered and washed with deionized water and then dried under vacuum at around 80-100°C. The above suction filtration, washing and vacuum drying methods are known in the art, and consequently the detail description thereof is omitted here for brevity.

The negative active material may be obtained by the above method.

According to some embodiments of the present disclosure, in order to further improve the performance of the prepared negative active material. In one embodiment, before step A), the carbon material is activated, for example, through acidization. The acidizing method may be any method. For example, with stirring, the carbon material and an acid solution may be mixed and heated to about 60-100°C for about 2-5 hours. In an example, the carbon material is graphite. After the graphite is acidized, other functional groups on the surface of the graphite may be removed, so that the graphite may be dispersed uniformly in the first mixture and may be better combined with the organic polymer. The acid solution may be any conventional acid. For example, the acid solution may be at least one selected from hydrochloric acid (HCl), sulphuric acid ($H_2SO_4$) and nitric acid ($HNO_3$).

Moreover, it has been found by the inventors that, the negative active material may be sintered under a vacuum or a protective atmosphere after the step D), thus greatly enhancing the capacity and the cycling performance of the lithium ion battery using the negative active material. Particularly, the sintering temperature may be about 300°C-900°C. The vacuum or protective atmosphere is well known in the art. For example, vacuum condition means that the absolute pressure is below $10^{-5}$Pa. The protective atmosphere may be any inert gas (helium, neon, argon, krypton, xenon) or nitrogen atmosphere.

The organic polymer may be carbonized by the above sintering treatment to form carbon with plenty of micropores. Sn may react with the carbon and may be closely attached around the graphite. Meanwhile, the micropores produced in the sintering process will increase the specific surface area of the material and may facilitate lithium ion intercalation and deintercalation in the charging and discharging process, thus further enhancing the capacity of the battery.

To further enhance the performance of the negative active material, in some embodiments, a first water soluble aiding compound may be added. The first water soluble aiding compound may be added with or before or after the addition of the Sn-containing compound, and before the addition of the complexing agent. The first water soluble aiding compound comprises at least one aiding element selected from the group consisting of Ag, Zn, Al, and Sb. The first water soluble aiding compound may be at least one soluble salt of the aiding element selected from the group consisting of Ag, Zn, Al, and Sb, for example, nitrate of the above aiding elements.

In one embodiment of present disclosure, the weight ratio of the first water soluble aiding compound to the Sn-containing compound may be about (0.04-0.2):1. And in one embodiment of present disclosure, the weight ratio of the first water soluble aiding compound to the Sn-containing compound may be about (0.05-0.1):1. By using the first water soluble aiding compound and the Sn-containing compound, the capacity of the negative material may be enhanced; meanwhile, expansion of the negative electrode material during the charging and discharging process may be alleviated, so that the cycling performance of the battery may be enhanced.

In another embodiment of present disclosure, the first mixture may comprise a second water soluble aiding compound, in which the second water soluble aiding compound may comprise at least one aiding element selected from the group consisting of Co, Ni, Cu, Cr, Fe, P, Be, and Si; and the weight ratio of the second water soluble adding compound to the Sn-containing compound may be about (0.04-0.2):1. And in one embodiment of present disclosure, the weight ratio of the second water soluble adding compound to the Sn-containing compound may be about (0.05-0.1):1. The addition of the second water soluble aiding compound may be before the addition of the complexing agent.

In some embodiments, when the first water soluble aiding compound or the first and second water soluble aiding compounds are added, a sintering step may or may not be performed after the step C). In one embodiment of present disclosure, the sintering step is carried out after the step C). During the sintering, Sn may form alloy particles with the first and second aiding elements, and a part of the aiding elements may enter into the crystal lattices of each other, thus alleviating volume increase of Sn during the charging and discharging process and further enhancing the cycling performance of the material.

In one embodiment of present disclosure, the method for preparing a negative active material comprises following steps of: mixing the carbon material with at least one acid solution selected from the group consisting of hydrochloric acid, sulphuric acid and nitric acid to obtain a mixture, and heating the mixture to about 60°C to 100°C for about 2 hours to about 5 hours to treat the carbon material, and filtering and drying the carbon material to obtain the treated carbon material; mixing the treated carbon material with the organic polymer, and then adding the Sn-containing compound and the first and second water soluble aiding compounds to obtain the first mixture; adding the complexing agent to the first mixture to obtain a second mixture; adding the reducing agent to the second mixture at a temperature of about 70°C to 90°C to react and obtain the reaction product, suction filtering the reaction product and washing the reaction product with deionized water, and then drying the reaction product at about 80-100°C under vacuum; and sintering the reaction product at about 300-900°C under vacuum or protective atmosphere to obtain the negative active material.

Negative active materials may be prepared by the above methods.

In the prepared negative active material, Sn-containing particles may be evenly distributed on the surface of the graphite. And in one embodiment of present disclosure, the Sn-containing particles may have an average particle size of about 20-200nm. And in an example, the Sn-containing particles may have an average particle size of about 20-100nm. If no sintering step is performed after the step C), the Sn-containing particle may be metal tin; and when the first mixture comprises the first or second water soluble aiding compound, the first aiding element or the second aiding element may be evenly distributed on the surface of the graphite. If a sintering step is carried out after the step C), the above mentioned Sn-containing particles may comprise at least one selected from metal tin, tin alloy, tin oxide and tin alloy oxide.

It had been unexpectedly found by the inventors that, when the first mixture comprises both the first water soluble aiding compound and the second water soluble aiding compound, the capacity and the cycling performance of the prepared negative material may be further enhanced. Especially, after the sintering step, the Sn-containing particles comprise tin alloy oxide having a formula of $SnO_x-M_1O_y-M_2O_z$, in which $0 \leq x \leq 3$, $0 \leq y \leq 3$, $0 \leq z \leq 3$, $M_1$ is at least one selected from the group consisting of Ag, Zn, Sb and Al, and $M_2$ is at least one selected from the group consisting of Co, Ni, Cu, Fe, Cr, P, Be, and Si, so that the performance of the prepared negative active material may be better. Addition of $M_1$ metal may enhance the capacity of the material with Sn and alleviate the volume increase of Sn during the charging and discharging process, and addition of $M_2$ aiding element may further alleviate the volume increase of Sn during the charging and discharging process. Because of addition of $M_1$ and $M_2$, the cycling performance of the material may be enhanced to a certain degree. By adding the first water soluble aiding compound and/or the second water soluble aiding compound to the first mixture, the above mentioned tin alloy oxide may be obtained after the sintering step.

One embodiment of the present disclosure further provides a negative electrode material. The negative electrode material comprises a negative active material, a binding agent and a conductive agent. The negative active material is the negative active material prepared according to the above method.

In the negative electrode material, the binding agent may be any conventional material. For example, the binding agent may be at least one selected from the group consisting of sodium carboxymethyl cellulose, polyvinylidene fluoride, polytetrafluoroethylene, polyethylene, polypropylene, ethylene-propylene-diene terpolymer, sulfonated ethylene-propylene-diene terpolymer, styrene/butadiene rubber and fluororubber. And in one embodiment of present disclosure, the binding agent is a composite binding agent of styrene/butadiene rubber and sodium carboxymethyl cellulose.

In the above negative electrode material, the content of each material may vary in a large range. For example, the weight ratio of the negative active material to the binding agent may be about (5-50): 1. And in one embodiment of present disclosure, the weight ratio of the negative active material to the binding agent may be about (10-35):1. If the composite binding agent is used, the weight ratio of styrene/butadiene rubber to sodium carboxymethyl cellulose may be about (0.5-4):1.

There is no special limit on the method for preparing the negative electrode material. The negative active material, the binding agent and the conductive agent may be directly mixed.

Further, as an application of the above negative electrode material, embodiments of the present disclosure further provide a lithium ion battery. The lithium ion battery comprises a shell; an electrode core housed in the shell; a cover board for sealing the shell; and an electrolyte disposed inside the shell. The electrode core comprises a positive electrode plate, a negative electrode plate and a separator located between the positive electrode plate and the negative electrode plate. The positive electrode plate comprises a positive current collector and a positive electrode material coated on the positive current collector. The negative electrode plate comprises a negative current collector and a negative electrode material coated on the negative current collector. The negative electrode material is the above mentioned negative electrode material.

The method for preparing the lithium ion battery is well known in the art. For example, the positive active material and the negative active material may be mixed with the conductive agent and the binding agent in a solvent in a certain ratio to form a positive slurry and a negative slurry respectively, then the slurry may be coated onto a wide current collector, which may be then dried, rolled and sliced into electrode plates.

The drying and rolling conditions are well known to those skilled in the art. For example, in order to form the negative electrode plate, the coated current collector may be dried at a temperature of about 60-120°C for about 0.5-5 hours. And in one embodiment of present disclosure, the coated current collector may be dried at a temperature of about 80-110°C.

The electrode core structure of the battery according to an embodiment of the present disclosure may be any known electrode core in the art. In some embodiments, the electrode core may be formed by coiling or overlapping the positive electrode plate, the separator and the negative electrode plate. The coiling or overlapping method is well known to those skilled in the art.

There is no special limit on the positive electrode material. The positive electrode material may comprise a positive active material, a binding agent and a conductive agent. The positive active material may be any commercially available positive electrode material, for example, $LiFePO_4$, $Li_3V_2(PO_4)_3$, $LiMn_2O_4$, $LiMnO_2$, $LiNiO_2$, $LiCoO_2$, $LiVPO_4F$, or $LiFeO_2$. Ternary system material $Li_{1+x}L_{1-y-z}M_yN_zO_2$ may also be used as the positive active material, in which $-0.1 \leq x \leq 0.2$, $0 \leq y \leq 1$, $0 \leq z \leq 1$, $0 \leq y+z \leq 1.0$, L, M, or N may be at least one selected from the group consisting of Co, Mn, Ni, Al, Mg, Ga and 3d transition metal elements. The binding agent may be any known binding agent in the art, for example, it may be at least one selected from the group consisting of polyvinylidene fluoride (PVDF), polytetrafluoroethylene (PTFE) and styrene/butadiene rubber. The content of the binding agent may be about 0.1-15wt% of the positive active material. And in one embodiment of present disclosure, the content of the binding agent may be about 1-7wt% of the positive active material. The conductive agent may be any known conductive agent in the art, for example, it may be at least one selected from the group consisting of graphite, carbon fiber, carbon black, metal powder and fiber. The amount of the conductive agent may be about 0.1-20wt% of the positive active material. And in one embodiment of present disclosure, the amount of the conductive agent may be about 2-10wt%. The method for preparing the positive electrode plate may be any preparation method. For example, the positive active material, the binding agent and the conductive material may be firstly dissolved in a solvent to form a positive slurry. The amount of the solvent is known in the art and may be adjusted according to the required viscosity of the positive slurry and the operability. Then, the positive slurry may be coated onto the positive current collector, which is then dried, pressed and sliced into positive electrode plates. The coated positive current collector may be dried at a temperature of about 120°C for 5 hours. The solvent for the positive slurry may be any conventional solvent, for example, it may be at least one selected from the group consisting of N-methylpyrrolidone (NMP), N,N-dimethylformamide (DMF), N,N-diethylformamide (DEF), dimethyl sulfoxide (DMSO), tetrahydrofuran (THF), water and alcohols. The amount of the solvent may be any amount provided that the positive slurry may be coated onto the positive current collector. In some embodiments, the weight ratio of the positive active material to the positive slurry may be about 40-90%. And in one embodiment of present disclosure, the weight ratio of the positive active material to the positive slurry may be about 50-85%.

The separator in the battery is insulated and may retain liquids. The separator may be any conventional separator used in the lithium ion batteries, for example, polyolefin microporous film, polyethylene felt, glass fiber felt or ultra-fine glass fiber paper.

The electrolyte in the battery may be a non-aqueous electrolyte. The non-aqueous electrolyte may be a solution formed by dissolving an electrolyte lithium salt in a non-aqueous solvent, and may be any known non-aqueous electrolyte in the art. For example, the electrolyte lithium salt may be at least one selected from lithium hexafluorophosphate ($LiPF_6$), lithium perchlorate ($LiClO_4$), lithium tetrafluoroborate ($LiBF_4$), lithium hexafluoroarsenate ($LiAsF_6$), lithium hexafluorosilicate ($LiSiF_6$), lithium tetraphenylborate ($LiB(C_6H_5)_4$), lithium chloride (LiCl), lithium bromide (LiBr), lithium tetrachloroaluminate ($LiAlCl_4$), $LiC(SO_2CF_3)_3$, $LiCH_3SO_3$ and $LiN(SO_2CF_3)_2$. The non-aqueous solvent may be a mixed solvent of chain acid esters and cyclic acid esters. The chain acid ester may be at least one selected from the group consisting of dimethyl carbonate (DMC), diethyl carbonate (DEC), ethyl methyl carbonate (EMC), methyl propyl carbonate (MPC), dipropyl carbonate (DPC) and other chain organic esters containing fluorine, sulphur or unsaturated bond. The cyclic acid ester may be at least one selected from the group consisting of ethylene carbonate (EC), propenyl carbonate (PC), vinylene carbonate (VC), γ-butyrolactone (γ-BL), sultone and other cyclic organic esters containing fluorine, sulphur or unsaturated bond. In the non-aqueous electrolyte, the concentration of the electrolyte lithium salt may be about 0.1-2 mol/L. And in one embodiment of present disclosure, the concentration of the electrolyte lithium salt may be about 0.8-1.2 mol/L.

The method for preparing the battery is known in the art. In some embodiments, the electrode core is firstly disposed in the shell, and then the electrolyte is added to the shell. After that, the shell is sealed to form a battery. The sealing method and the amount of the electrolyte are known in the art.

The examples of the present disclosure will be further described in detail below.

Example 1

The present example provides a method for preparing a negative active material.

50g of graphite and the organic polymer polyoxyethylene-polyoxypropylene-polyoxyethylene (P123) were mixed to form a mixture in the weight ratio of 10:1; meanwhile, 21.5g of $SnCl_4$ was dissolved in water to form a 400ml solution and the solution was then added to the above mixture with stirring. The mixture was added into a volumetric flask which was then placed into a water bath and heated to 85°C. 20.5g of citric acid was added to deionized water to form a 250ml solution and then the solution was slowly added into the volumetric flask dropwise. 60g of sodium borohydride was added to deionized water to form a 250ml solution and then the solution was slowly added into the volumetric flask dropwise. The solution in the volumetric flask was then stirred at 85°C for 2 hours. The solution in the volumetric flask was filtered to form a reaction product, and the reaction product was dried at 80°C under vacuum for 12 hours to obtain a negative active material sample A1.

Example 2

The present example provides a method for preparing a negative active material.

50g of graphite and 500g of sulphuric acid with a concentration of 98% were mixed to form a mixture. The mixture was heated to 85°C and stirred for 3 hours. The mixture was then washed and filtered and then dried at 60°C for 12 hours to obtain acidized graphite. The acidized graphite was then mixed with the organic polymer P123 in a weight ratio of about 10:1 to form a mixture, meanwhile, 21.5g of $SnCl_4$ was dissolved in water to form a 400ml solution and the solution was then added to the mixture with stirring. The mixture was added into a volumetric flask which was then placed into a water bath and heated to 85°C. 28 g of citric acid was added to deionized water to form a 250ml solution and then the solution was slowly added into the volumetric flask dropwise. 60g of sodium borohydride was added to deionized water to form a 250ml solution and then the solution was slowly added into the volumetric flask dropwise. The solution in the volumetric flask was then stirred at 85°C for 2 hours. The solution in the volumetric flask was filtered to form a reaction product, and the reaction product was dried at 80°C under vacuum for 12 hours to obtain a negative active material sample A2.

Example 3

The present example provides a method for preparing a negative active material.

The method for preparing the negative active material is substantially the same as that in Example 2, except that the prepared sample A2 was sintered at 300°C under argon protection for 10 hours to prepare a negative active material sample B1.

Example 4

The present example provides a method for preparing a negative active material.

The method for preparing the negative active material is substantially the same as that in Example 2, except that the prepared sample A2 was sintered at 600°C under argon protection for 10 hours to prepare a negative active material sample C1.

Example 5

The present example provides a method for preparing a negative active material.

The method for preparing the negative active material is substantially the same as that in Example 2, except that the prepared sample A2 was sintered at 900°C under argon protection for 10 hours to prepare a negative active material sample D1.

Example 6

The present example provides a method for preparing a negative active material.

50g of graphite and 500g of hydrochloric acid with a concentration of 34% were mixed to form a mixture. The mixture was heated to 85°C and stirred for 3 hours. The mixture was then washed and filtered and then dried at 60°C for 12 hours to obtain acidized graphite. The acidized graphite was then mixed with the organic polymer polytetrafluoroethylene (PVDF) in a weight ratio of about 10:1 to form a mixture, meanwhile, 21.5 g of $SnSO_4$ was dissolved in water to form a 400ml solution and the solution was then added to the mixture with stirring. The mixture was added into a volumetric flask which was then placed into a water bath and heated to 85°C. 35g of tartaric acid was added to deionized water to form a 250ml solution and then the solution was slowly added into the volumetric flask dropwise. 60g of sodium borohydride was added to deionized water to form a 250ml solution and then the solution was slowly added into the volumetric flask dropwise. The solution in the volumetric flask was then stirred at 85°C for 2 hours. The solution in the volumetric flask was filtered to form a reaction product, and the reaction product was dried at 80°C under vacuum for 12 hours and then sintered at 600°C under vacuum for 10 hours to obtain a negative active material sample C2.

Example 7

The present example provides a method for preparing a negative active material.

50g of graphite and 500g of nitric acid with a concentration of 68% were mixed to form a mixture. The mixture was heated to 85°C and stirred for 3 hours. The mixture was then washed and filtered and then dried at 60°C for 12 hours to obtain acidized graphite. The acidized graphite was then mixed with the organic polymer asphalt in a weight ratio of about 10:1 to form a mixture, meanwhile, 18g of $SnSO_4$, 1g of $ZnSO_4$ and 1.5g of $CoSO_4$ were dissolved in water to form a 400ml solution and the solution was then added to the mixture with stirring. The mixture was added into a volumetric flask which was then placed into a water bath and heated to 85°C. 20.5 g of sodium ethylene diamine tetracetate (EDTA) was added to deionized water to form a 250ml solution and then the solution was slowly added into the volumetric flask dropwise. 75g of acetaldehyde was added to deionized water to form a 250ml solution and then the solution was slowly added into the volumetric flask dropwise. The solution in the volumetric flask was then stirred at 85°C for 2 hours. The solution in the volumetric flask was filtered to form a reaction product. The reaction product was then dried at 80°C under vacuum for 12 hours, and then sintered at 600°C under vacuum or protective atmosphere for 10 hours to obtain a negative active material sample C3.

Example 8

The present example provides a method for preparing a negative active material.

50g of graphite and 500g of nitric acid with a concentration of 68% were mixed to form a mixture. The mixture was heated to 85°C and stirred for 3 hours. The mixture was then washed and filtered and then dried at 60°C for 12 hours to obtain acidized graphite. The acidized graphite was then mixed with the organic polymer asphalt in a weight ratio of about 10:1 to form a mixture, meanwhile, 18g of $SnSO_4$, 1g of $ZnSO_4$ and 1.5g of $NiSO_4$ were dissolved in water to form a 400ml solution and the solution was then added to the mixture with stirring. The mixture was added into a volumetric flask which was then placed into a water bath and heated to 85°C. 20.5 g of sodium ethylene diamine tetracetate (EDTA) was added to deionized water to form a 250ml solution and then the solution was slowly added into the volumetric flask dropwise. 75g of acetaldehyde was added to deionized water to form a 250ml solution and then the solution was slowly added into the volumetric flask dropwise. The solution in the volumetric flask was then stirred at 85°C for 2 hours. The solution in the volumetric flask was filtered to form a reaction product, and the reaction product was then dried at 80°C under vacuum for 12 hours, and then sintered at 600°C under vacuum or protective atmosphere for 10 hours to obtain a negative active material sample C4.

Example 9

The present example provides a method for preparing a negative active material.

50g of graphite and 500g of nitric acid with a concentration of 68% were mixed to form a mixture. The mixture was heated to 85°C and stirred for 3 hours. The mixture was then washed and filtered and then dried at 60°C for 12 hours to obtain acidized graphite. The acidized graphite was then mixed with the organic polymer asphalt in a weight ratio of about 10:1 to form a mixture, meanwhile, 18g of $SnSO_4$, 1g of $Al_2(SO_4)_3$ and 1.5g of $FeSO_4$ were dissolved in water to form a 400ml solution and the solution was then added to the mixture with stirring. The mixture was added into a volumetric flask which was then placed into a water bath and heated to 85°C. 20.5 g of sodium succinate was added to deionized water to form a 250ml solution and then the solution was slowly added into the volumetric flask dropwise. 82g of sodium hypophosphite was added to deionized water to form a 250ml solution and then the solution was slowly added into the volumetric flask dropwise. The solution in the volumetric flask was then stirred at 85°C for 2 hours. The solution in the volumetric flask was filtered to form a reaction product. The reaction product was then dried at 80°C under vacuum for 12 hours, and then sintered at 600°C under vacuum for 10 hours to obtain a negative active material sample C5.

Example 10

The present example provides a method for preparing a negative active material.

50g of graphite and 500g of nitric acid with a concentration of 68% were mixed to form a mixture. The mixture was heated to 85°C and stirred for 3 hours. The mixture was then washed and filtered and then dried at 60°C for 12 hours to obtain acidized graphite. The acidized graphite was then mixed with the organic polymer polytetrafluoroethylene in a weight ratio of about 10:1 to form a mixture, meanwhile, 18g of $SnSO_4$, g of $Al_2(SO_4)_3$ and 1.5g of $Cr_2(SO_4)_3$ were dissolved in water to form a 400ml solution and the solution was then added to the mixture with stirring. The mixture was added into a volumetric flask which was then placed into a water bath and heated to 85°C. 20.5 g of sodium succinate was added to deionized water to form a 250ml solution and then the solution was slowly added into the volumetric flask dropwise. 82g of sodium hypophosphite was added to deionized water to form a 250ml solution and then the solution was slowly added into the volumetric flask dropwise. The solution in the volumetric flask was then stirred at 85°C for 2 hours. The solution in the volumetric flask was filtered to form a reaction product. The reaction product was then dried at 80°C under vacuum for 12 hours, and then sintered at 600°C under vacuum for 10 hours to obtain a negative active material sample C6.

Example 11

The present example provides a negative electrode material and a lithium ion battery.

The preparation of the positive electrode plate: $LiCoO_2$, acetylene black and PVDF in a weight ratio of about 100:7:4.5 were dissolved in NMP and stirred to form a slurry, the slurry was coated onto an aluminum foil and then dried at about 90±5°C, and the aluminum foil was then rolled and sliced into positive electrode plates.

The preparation of the negative electrode plate: the negative active material sample A1, styrene/butadiene rubber and sodium carboxymethyl cellulose in a weight ratio of about 100:3:2 were mixed uniformly, coated onto a plate and then pressed to form the negative electrode plate, and the negative electrode plate was then dried at 120°C under vacuum for above 24 hours.

The positive electrode plate, the negative electrode plate and a polypropylene (PP) separator with a thickness of 25μm were wound in one direction to form a prismatic lithium ion electrode core which was then placed into a shell, an electrolyte of 1.0mol/L $LiPF_6$/(EC+DEC+DMF)(the weight ratio of EC, DEC, and DMF being about 1: 1: 1) was then added into the shell, and the shell was sealed to form a prismatic battery S1 having a thickness of about 5mm, a width of about 34mm and a height of about 50mm.

Examples 12-20

The present examples provide the negative electrode material and the lithium ion battery.

The methods for preparing the lithium ion batteries were substantially the same as that in Example 11, except that A2, B1, C1-C6, and D1 replace A1 to form batteries S2, S3, S4-S9, and S10 respectively.

Comparative Example 1

The present comparative example provides the negative electrode material and the lithium ion battery in the prior art.

The method for preparing the lithium ion battery was substantially the same as that in Example 11, except that untreated graphite replaces A1 to form a battery DBS1.

Performance test and characterization

Electron microscope

Scanning electron microscope (SEM) was used to test samples A2, B1, and C1.

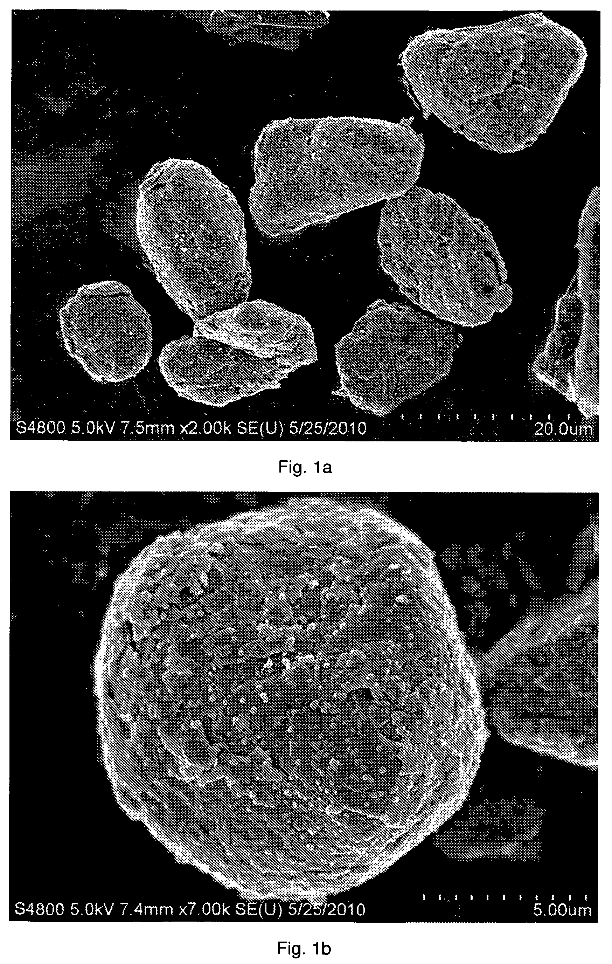

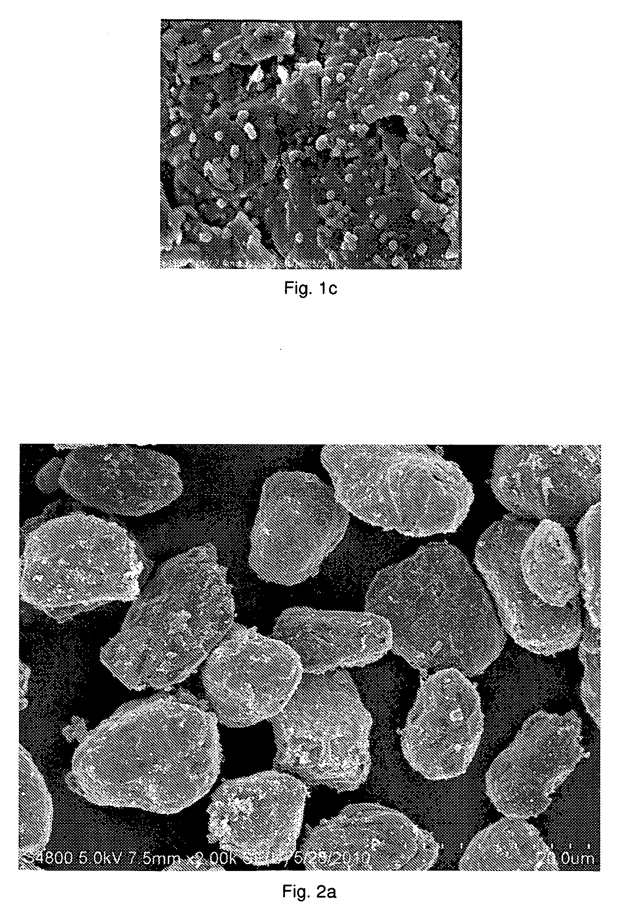

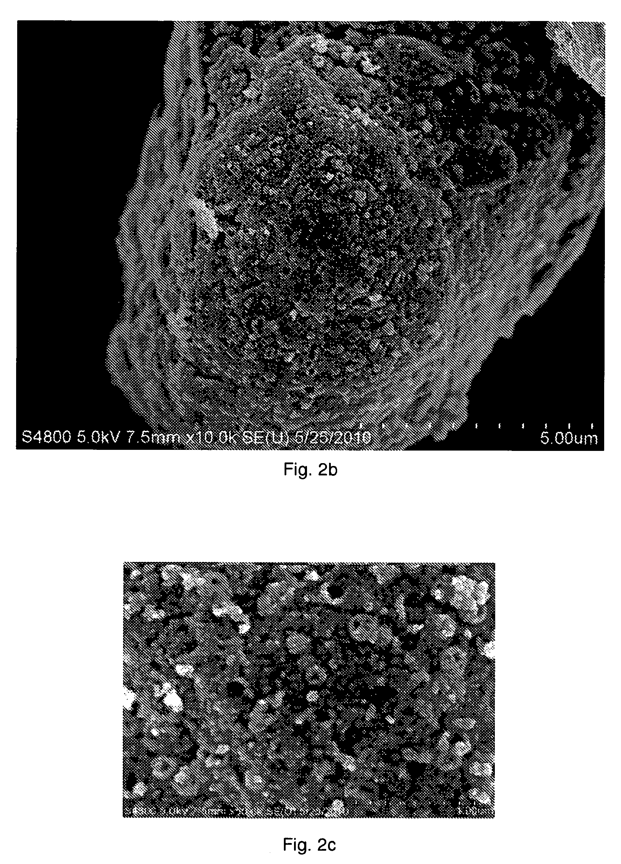

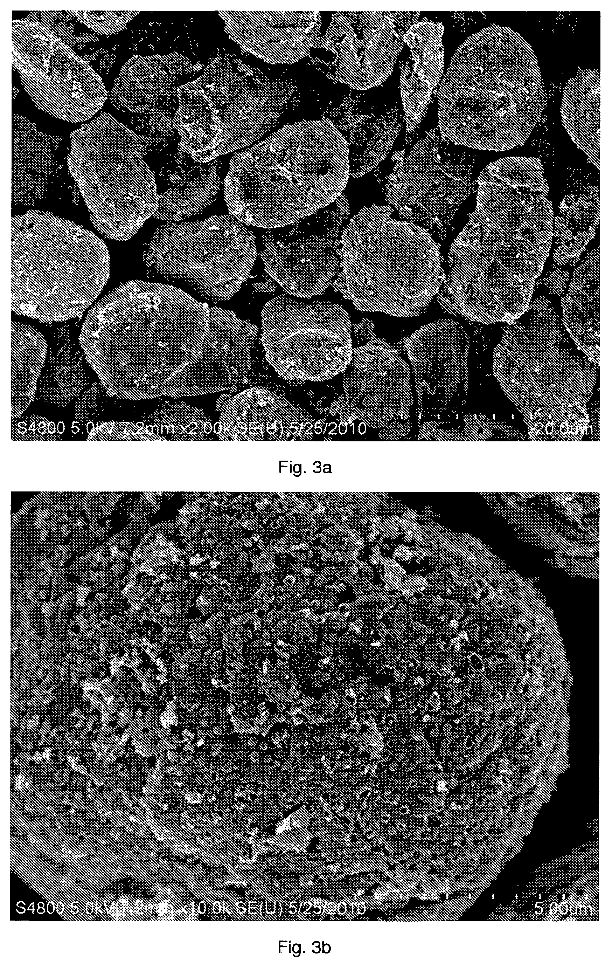

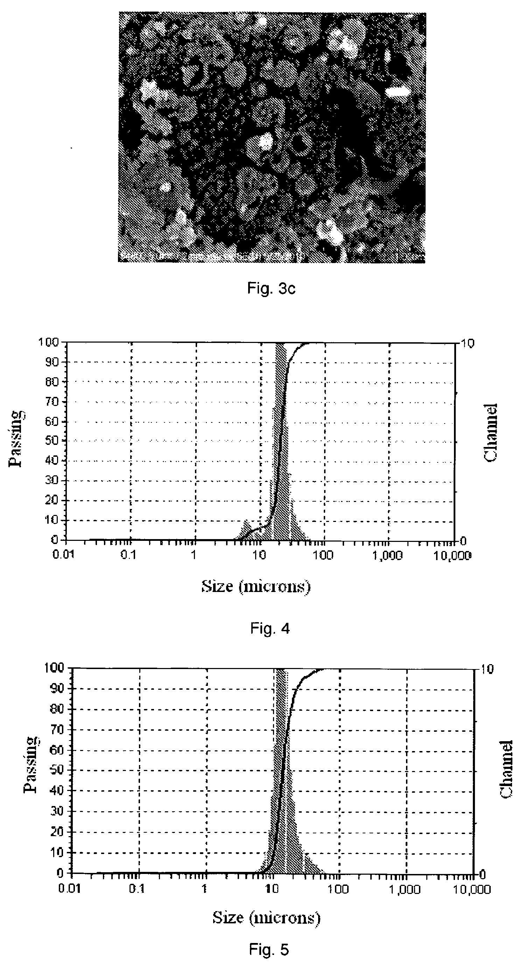

Fig. 1a (2000-fold magnification), Fig. 1b (7000-fold magnification), and Fig. 1c (20000-fold magnification) are the SEM images of the sample A2 at different magnifications respectively; Fig. 2a (2000-fold magnification), Fig. 2b (10000-fold magnification), and Fig. 2c (50000-fold magnification) are the SEM images of the sample B1 at different magnifications respectively; and Fig. 3a (2000-fold magnification), Fig. 3b (10000-fold magnification), and Fig. 3c (50000-fold magnification) are the SEM images of the sample C1 at different magnifications respectively. It may be seen from the drawings that in the sample A2, the Sn-containing particles are uniformly coated around the spherical graphite, and the particle size of the Sn-containing particles was on a nanometer scale. After 300°C treatment (sample B1) or 600°C treatment (sample C1), with the increase of the temperature, the Sn and the compound on the surface of the graphite may be melted and absorbed, crystallized, carbonized or reduced, so that Sn may be more closely coated around the surface of the graphite; meanwhile, due to high temperature sintering, plenty of micropores may be formed on the surface of the material thus facilitating lithium ion intercalation and deintercalation.

Particle size analysis

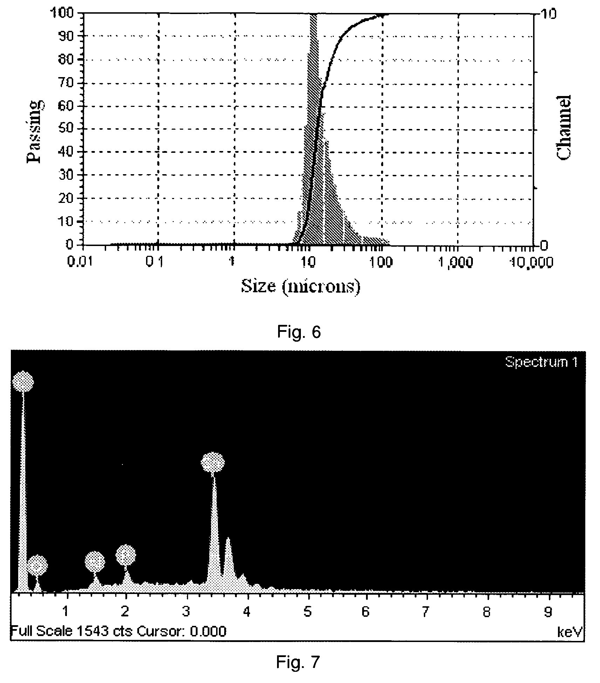

The sample A2, the sample C1 (sintered at 600°C) and the sample D1 (sintered at 900°C) were analyzed to form a particle size distribution diagram of A2 (Fig. 4), a particle size distribution diagram of C1 (Fig. 5) and a particle size distribution diagram of D1 (Fig. 6) respectively.
It may be seen from Figs. 4-6 that the particle size decreases after the sintering step, and the particle size distribution is uniform, which indicates that macroscopically Sn is uniformly coated around the graphite.

Specific surface area test

The graphite, the acidized graphite, the sample A2, and the samples B1, C1, and D1 sintered at 300°C, 600°C, and 900°C respectively were tested.
The testing result is shown in Table 1. It may be seen from the result that, the acidized graphite has an increased specific surface area; after the surface of the graphite is coated with Sn, the specific surface area is decreased by half; with the increase of the sintering temperature, the Sn and the compound on the surface of the graphite particles react and the specific surface area starts to increase; however, when the sintering temperature is too high and the specific surface area is too large, the performance of the material may also be influenced. The composition of the tin-containing particle coated around the graphite may vary with the sintering temperature, and therefore the composition and the coating amount of the tin-containing particle coated around the graphite may be controlled by controlling the sintering temperature, thus controlling the specific capacity.

Table 1

| Sample | Test tube weight | Total weight | Sample weight | Testing result |
| --- | --- | --- | --- | --- |
| Graphite (PDT) | 9.1719g | 9.6085g | 0.4366g | $8.45m^2/g$ |
| Acidized graphite | 9.4238g | 9.8563g | 0.4325g | $9.04m^2/g$ |
| A2 | 8.9848g | 9.2734g | 0.2744g | $4.00m^2/g$ |
| B1 | 8.9093g | 9.3209g | 0.4197g | $5.28m^2/g$ |
| C1 | 8.6331g | 8.9075g | 0.2886g | $6.47m^2/g$ |
| D1 | 7.7992g | 7.9793g | 0.1801g | $11.39m^2/g$ |

Electron spectrum test

To determine the composition of the sample, the sample A2 was analyzed by EDS, and the testing was performed on a scanning electron microscope (SEM) spectrometer.
As shown in Fig. 7, three main characteristic peaks of C, Sn, and O are observed, which indicates that Sn is coated around the graphite. Other weak peaks are caused by other impurities in the reaction process.

X-ray diffraction analysis

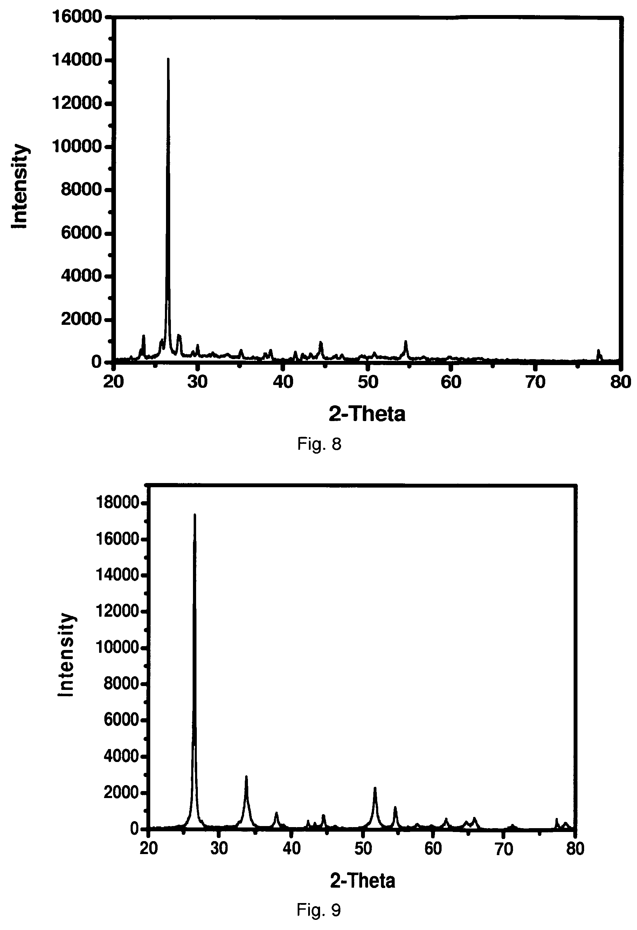

Rigaku D/MAX-PC2200 X-ray diffractometer (Cu target, $\lambda = 0.15405nm$) was used to analyze the crystal structure of the sample A2, the sample C1 sintered at 600°C, and the sample D1 sintered at 900°C, and corresponding diffraction patterns Fig. 8, Fig. 9 and Fig. 10 were obtained.
As shown in Figs. 8-10, $SnO_2$ is coated on the surface of C1. When the temperature is increased to 900°C, further reactions occur to form SnO and Sn.

Battery cycling performance test

Batteries S1-S10 and DBS1 were tested as follows.
Charging and discharging specific capacity of the negative active material.
The battery was discharged, the discharging current density was about $0.2mA/cm^2$, and the discharge cut-off voltage was about 0.5mV. After the discharging was completed, the initial discharging specific capacity was calculated according to the equation (1):

$$\text{Initial discharging specific capacity (mAh/g)} = \text{discharging capacity/weight of the active material (1)}$$

After the initial discharging was completed, the battery was charged, the charging current density was about $0.2mA/cm^2$, and the charge cut-off voltage was about 2.5V. After the charging was completed, the initial charging specific capacity was calculated according to the equation (2):

$$\text{Initial charging specific capacity (mAh/g)} = \text{charging capacity/weight of the active material (2)}$$

The results are shown in Table 2.

Cycling performance

The battery was charged at a constant current of 0.3mA, and the charge cut-off voltage was 2.5V. After the voltage was increased to 2.5V, the battery was charged at a constant voltage, then the battery was discharged at 0.3mA, and the discharge cut-off voltage was about 0.004V. The above steps were repeated and continuous charging and discharging were performed to obtain the battery capacity after 50 charge/discharge cycles. The battery discharge capacity retention rate was calculated according to the following equation and the result was shown in Table 2.
The discharge capacity retention rate = (discharging capacity after 50 cycles/ initial 5 discharging capacity $\times$ 100°C
The testing results are shown in Table 2.

Table 2

| Sample | Initial charging specific capacity (mAh/g) | Initial discharging specific capacity (mAh/g) | Discharge capacity retention rate (%) |
|---|---|---|---|
| S4 | 563.82 | 711.04 | 89.32 |
| S5 | 567.05 | 718.39 | 89.21 |
| S6 | 548.4 | 670.04 | 90.86 |
| S7 | 545.05 | 663.2 | 90.23 |
| S8 | 545.72 | 667.14 | 90.52 |
| DBS1 | 352.23 | 390.34 | 91.87 |

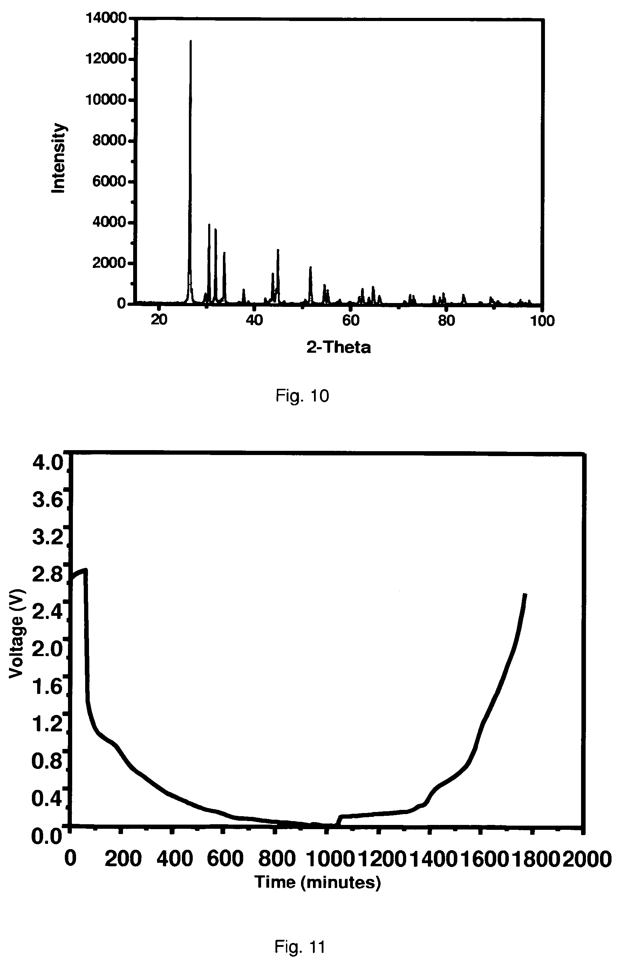

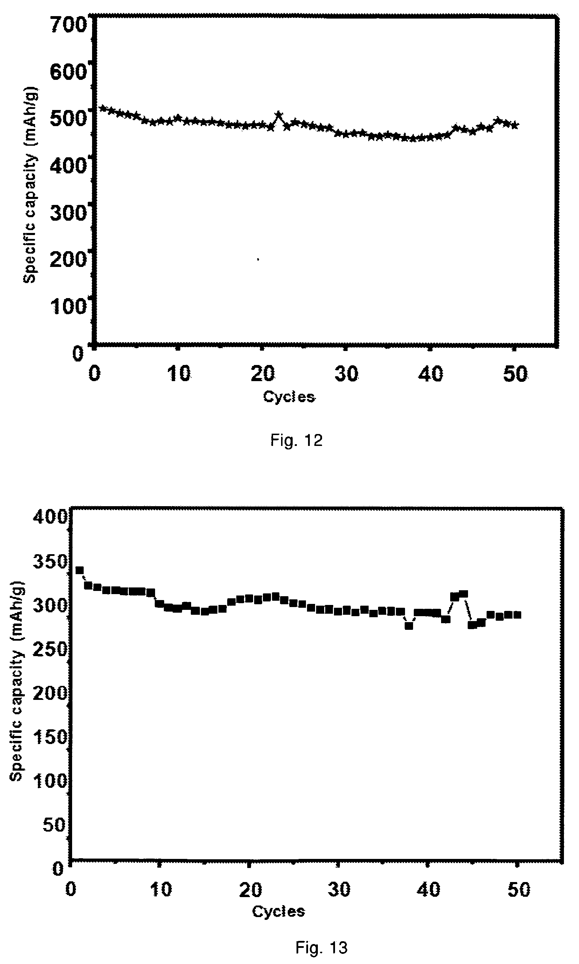

It can be seen from the testing results in Table 2 that, by using the negative active materials prepared according to the method according to the embodiments of the present disclosure in the lithium ion batteries, the capacity and the cycling performance of the battery may be significantly improved.
As shown in Figs. 11-13, Fig. 11 shows a specific capacity testing result of the battery S4, and it can be seen that the specific capacity of the battery S4 is enhanced greatly. Compared with the cycling performance of the battery DBS1 shown in Fig. 13, the cycling performance of the battery S4 shown in Fig. 12 docs not change obviously.

**Claims**

1. A method for preparing a negative active material, comprising:

   A) mixing a carbon material, an organic polymer, and an aqueous solution of a Sn-containing compound to obtain a first mixture;
   B) adding a complexing agent to the first mixture with stirring to obtain a second mixture;
   C) adding a reducing agent to the second mixture to react and obtain a reaction product; and
   D) filtering, washing and then drying the reaction product to obtain the negative active material.

2. The method according to claim 1, further comprising a step of sintering the obtained negative active material under a vacuum or a protective atmosphere, and the sintering is carried out at a temperature of about 300°C to about 900°C.

3. The method according to any one of the preceeding claims further comprising a step of activating the carbon material before the step A), and the activating step comprises:

   mixing the carbon material with an acid solution with stirring to obtain a mixture and then heating the mixture to a temperature of about 60°C to about 100°C for about 2 hours to 5 hours.

4. The method according to claim 3, wherein,
   in the step C), the reaction temperature is about 70°C to about 90°C; and
   in the step D), the reaction product is suction filtered and washed with deionized water, and then is dried under vacuum at about 80-100°C.

5. The method according to claim 4, wherein,
   the carbon material is at least one selected from the group consisting of natural graphite, artificial graphite, hard carbon, and mesocarbon microbead, and the natural graphite or artificial graphite is spherical graphite or flake graphite;
   the acid solution is at least one selected from the group consisting of hydrochloric acid, sulphuric acid and nitric acid;
   the organic polymer is at least one selected from the group consisting of asphalt, polyoxyethylene-polyoxypropylene-polyoxyethylene, polyvinylidene fluoride and polytetrafluoroethylene; and
   the Sn-containing compound is at least one selected from the group consisting of stannic sulfate, stannic chloride, stannous sulfate and stannous chloride,
   wherein in the first mixture, the weight ratio of the carbon material, the organic polymer, and the Sn-containing compound is about (1- 4): (0.1- 0.4): 1.

6. The method according to claim 1, wherein the complexing agent is at least one selected from the group consisting of citric acid, tartaric acid, sodium ethylene diamine tetracetate, and sodium succinate; and in the second mixture, the weight ratio of the complexing agent to the Sn-containing compound is about (0.8-3): 1; and
   the reducing agent is at least one selected from the group consisting of sodium borohydride, acetaldehyde, formaldehyde, and sodium hypophosphite; and in the second mixture, the weight ratio of the reducing agent to the Sn-containing compound is about (2.7-6): 1.

7. The method according to any one of the preceeding claims, wherein the first mixture further comprises a first water soluble aiding compound or a second water soluble aiding compound,
   wherein, the first water soluble aiding compound comprises at least one aiding element selected from the group consisting of Ag, Zn, Al, and Sb; and the second water soluble aiding compound comprises at least one aiding element selected from the group consisting of Co, Ni, Cu, Cr, Fe, P, Si, and B
   in the first mixture, the weight ratio of the first water soluble aiding compound additive to the Sn-containing compound is about (0.04-0.2):1, and in the first mixture, the weight ratio of the second water soluble aiding compound to the Sn-containing compound is about (0.04-0.2):1.

8. The method according to claim 7, comprising:

   mixing the carbon material with at least one acid solution selected from the group consisting of hydrochloric acid, sulphuric acid and nitric acid to obtain a mixture, and heating the mixture to about 60°C to 100°C for about 2 hours to about 5 hours to treat the carbon material, and filtering and drying the carbon material to obtain the treated carbon material;

mixing the treated carbon material with the organic polymer, and then adding the Sn-containing compound and the first and second water soluble aiding compounds to obtain the first mixture;

adding the complexing agent to the first mixture to obtain a second mixture;

adding the reducing agent to the second mixture at a temperature of about 70°C to 90°C to react and obtain the reaction product;

suction filtering the reaction product and washing the reaction product with deionized water, and then drying the reaction product at about 80-100°C under vacuum; and

sintering the reaction product at about 300-900°C under vacuum or protective atmosphere to obtain the negative active material.

9. The method according to claim 7 or 8, wherein,

the organic polymer is at least one selected from the group consisting of asphalt and polyoxyethylene-polyoxypropylene-polyoxyethylene,

the Sn-containing compound is at least one selected from the group consisting of stannic sulfate and stannic chloride;

the complexing agent is at least one selected from the group consisting of citric acid, tartaric acid, sodium ethylene diamine tetracetate, and sodium succinate;

the reducing agent is at least one selected from the group consisting of sodium borohydride, acetaldehyde, formaldehyde, and sodium hypophosphite;

the first water soluble aiding compound is at least one selected from the group consisting of sulphate, chloride, and nitrate of zinc or aluminum; and

the second water soluble aiding compound is at least one selected from the group consisting of sulphate, chloride, and nitrate of cobalt, nickel, iron or chromium and compounds or oxide of P, B or Si.

10. A negative electrode material comprising a negative active material, a binding agent and a conductive agent, wherein the negative active material is a negative active material prepared according to the method according to any of claims 1-13.

11. The negative electrode material according to claim 10, wherein the negative active material comprises tin-containing particles with an average particle size of about 20-200nm.

12. The negative electrode material according to claim 10 or 11, wherein the negative active material comprises at least one tin-containing particle selected from the group consisting of tin, tin alloy, tin oxide and tin alloy oxide.

13. The negative electrode material according to claim 12, wherein the tin alloy oxide has a formula of $SnO_x-M_1O_y-M_2O_z$, in which $0<x\leq3$, $0<y\leq3$, $0<z\leq3$, $M_1$ is at least one selected from the group consisting of Ag, Zn, Sb, Al, and Pb, and $M_2$ is at least one selected from the group consisting of Co, Ni, Cu, Fe, Cr, P, Be, and Si.

14. The negative electrode material according to any one of claims 10 to 14, wherein the binding agent is at least one selected from the group consisting of sodium carboxymethyl cellulose, polyvinylidene fluoride, polytetrafluoroethylene, polyethylene, polypropylene, ethylene-propylene-diene terpolymer, sulfonated ethylene-propylene-diene terpolymer, styrene/butadiene rubber and fluororubber, and the weight ratio of the negative active material to the binding agent is about (5-50): 1.

15. A lithium ion battery, comprising:

a shell;
an electrode core housed in the shell;
a cover board for sealing the shell; and
an electrolyte disposed inside the shell;

wherein,

the electrode core comprises a positive electrode plate, a negative electrode plate and a separator disposed between the positive electrode plate and the negative electrode plate;

the positive electrode plate comprises a positive current collector and a positive electrode material coated on the positive current collector; and

the negative electrode plate comprises a negative current collector and a negative electrode material coated on the negative current collector;

wherein,
the negative electrode material is the negative electrode material according to any of claims 10-14.

**Patentansprüche**

1. Ein Verfahren zum Herstellen eines negativen aktiven Materials, das folgende Schritte aufweist:

    A) Mischen eines Kohlenstoffmaterials, eines organischen Polymers und einer wässrigen Lösung einer Sn-haltigen Verbindung, um ein erstes Gemisch zu erhalten;
    B) Hinzufügen eines Komplexbildners zu dem ersten Gemisch unter Rühren, um ein zweites Gemisch zu erhalten;
    C) Hinzufügen eines Reduktionsmittels zu dem zweiten Gemisch, um dasselbe reagieren zu lassen und ein Reaktionsprodukt zu erhalten; und
    D) Filtern, Waschen und anschließend Trocknen des Reaktionsprodukts, um das negative aktive Material zu erhalten.

2. Das Verfahren gemäß Anspruch 1, das ferner einen Schritt des Sinterns des erhaltenen negativen aktiven Materials unter Vakuum oder einer Schutzatmosphäre aufweist und das Sintern bei einer Temperatur von etwa 300 °C bis etwa 900°C durchgeführt wird.

3. Das Verfahren gemäß einem der vorhergehenden Ansprüche, das ferner einen Schritt des Aktivierens des Kohlenstoffmaterials vor Schritt A) aufweist und der Aktivierungsschritt folgende Schritte aufweist:

    Mischen des Kohlenstoffmaterials mit einer Säurelösung unter Rühren, um ein Gemisch zu erhalten, und anschließend Erwärmen des Gemischs auf eine Temperatur von etwa 60°C bis etwa 100°C für etwa 2 Stunden bis 5 Stunden.

4. Das Verfahren gemäß Anspruch 3, bei dem
bei Schritt C) die Reaktionstemperatur bei etwa 70°C bis etwa 90°C liegt; und bei Schritt D) das Reaktionsprodukt einer Saugfilterung unterzogen und mit entionisiertem Wasser gewaschen wird und anschließend unter Vakuum bei etwa 80-10 °C getrocknet wird.

5. Das Verfahren gemäß Anspruch 4, bei dem
das Kohlenstoffmaterial zumindest ein aus der Gruppe, die natürlichen Graphit, künstlichen Graphit, Hartkohlenstoff und Mesokohlenstoff-Mikrokügelchen umfasst, ausgewähltes ist und der natürliche Graphit oder künstliche Graphit ein Kugelgraphit oder Lamellengraphit ist;
die Säurelösung zumindest eine aus der Gruppe, die Chlorwasserstoffsäure, Schwefelsäure und Salpetersäure umfasst, ausgewählte ist;
das organische Polymer zumindest ein aus der Gruppe, die Asphalt, Polyoxyethylen-Polyoxypropylen-Polyoxyethylen, Polyvinylidenfluorid und Polytetrafluorethylen umfasst, ausgewähltes ist; und
die Sn-haltige Verbindung zumindest eine aus der Gruppe, die Zinnsulfat, Zinnchlorid, Zinn(II)-sulfat und Zinn(II)-chlorid umfasst, ausgewählte ist, wobei in dem ersten Gemisch das Gewichtsverhältnis des Kohlenstoffmaterials, des organischen Polymers und der Sn-haltigen Verbindung bei etwa (1-4): (0,1-0,4):1 liegt.

6. Das Verfahren gemäß Anspruch 1, bei dem der Komplexbildner zumindest ein aus der Gruppe, die Zitronensäure, Weinsäure, Natriumethylendiamintetraacetat und Natriumsuccinat umfasst, ausgewählter ist; und in dem zweiten Gemisch das Gewichtsverhältnis des Komplexbildners zu der Sn-haltigen Verbindung bei etwa (0,8-3):1 liegt; und das Reduktionsmittel zumindest ein aus der Gruppe, die Natriumborhydrid, Acetaldehyd, Formaldehyd und Natriumhypophosphit umfasst, ausgewähltes ist; und in dem zweiten Gemisch das Gewichtsverhältnis des Reduktionsmittels zu der Sn-haltigen Verbindung bei etwa (2,7-6):1 liegt.

7. Das Verfahren gemäß einem der vorhergehenden Ansprüche, bei dem das erste Gemisch ferner eine erste wasserlösliche Hilfsverbindung oder eine zweite wasserlösliche Hilfsverbindung aufweist,
wobei die erste wasserlösliche Hilfsverbindung zumindest ein Hilfselement aufweist, das aus der Gruppe, die Ag, Zn, Al und Sb umfasst, ausgewählt ist; und die zweite wasserlösliche Hilfsverbindung zumindest ein Hilfselement aufweist, das aus der Gruppe, die Co, Ni, Cu, Cr, Fe, P, Si und B umfasst, ausgewählt ist,
in dem ersten Gemisch das Gewichtsverhältnis des ersten wasserlöslichen Hilfsverbindungszusatzes zu der Sn-haltigen Verbindung bei etwa (0,04-0,2):1 liegt, und in dem ersten Gemisch das Gewichtsverhältnis der zweiten wasserlöslichen Hilfsverbindung zu der Sn-haltigen Verbindung bei etwa (0,04-0,2):1 liegt.

8.  Das Verfahren gemäß Anspruch 7, das folgende Schritte aufweist:

    Mischen des Kohlenstoffmaterials mit zumindest einer Säurelösung, die aus der Gruppe, die Salzsäure, Schwefelsäure und Salpetersäure umfasst, ausgewählt ist, um ein Gemisch zu erhalten, und Erwärmen des Gemischs auf etwa 60°C bis 100 °C für etwa 2 Stunden bis etwa 5 Stunden, um das Kohlenstoffmaterial zu behandeln, und Filtern und Trocknen des Kohlenstoffmaterials, um das behandelte Kohlenstoffmaterial zu erhalten;
    Mischen des behandelten Kohlenstoffmaterials mit dem organischen Polymer und anschließend Hinzufügen der Sn-haltigen Verbindung und der ersten und zweiten wasserlöslichen Hilfsverbindung, um das erste Gemisch zu erhalten;
    Hinzufügen des Komplexbildners zu dem ersten Gemisch, um ein zweites Gemisch zu erhalten;
    Hinzufügen des Reduktionsmittels zu dem zweiten Gemisch bei einer Temperatur von etwa 70°C bis 90°C, um dasselbe reagieren zu lassen und das Reaktionsprodukt zu erhalten;
    Saugfiltern des Reaktionsprodukts und Waschen des Reaktionsprodukts mit entionisiertem Wasser und anschließendes Trocknen des Reaktionsprodukts bei etwa 80-100°C unter Vakuum; und
    Sintern des Reaktionsprodukts bei etwa 300-900°C unter Vakuum oder einer Schutzatmosphäre, um das negative aktive Material zu erhalten.

9.  Das Verfahren gemäß Anspruch 7 oder 8, bei dem
    das organische Polymer zumindest ein aus der Gruppe, die Asphalt und Polyoxyethylen-Polyoxypropylen-Polyoxyethylen umfasst, ausgewähltes ist,
    die Sn-haltige Verbindung zumindest eine aus der Gruppe, die Zinnsulfat und Zinnchlorid umfasst, ausgewählte ist;
    der Komplexbildner zumindest ein aus der Gruppe, die Zitronensäure, Weinsäure, Natriumethylendiamintetraacetat und Natriumsuccinat umfasst, ausgewählter ist; das Reduktionsmittel zumindest ein aus der Gruppe, die Natriumborhydrid, Acetaldehyd, Formaldehyd und Natriumhypophosphit umfasst, ausgewähltes ist;
    die erste wasserlösliche Hilfsverbindung zumindest eine aus der Gruppe, die Sulfat, Chlorid und Nitrat von Zink oder Aluminium umfasst, ausgewählte ist; und
    die zweite wasserlösliche Hilfsverbindung zumindest eine aus der Gruppe, die Sulfat, Chlorid und Nitrat von Kobalt, Nickel, Eisen oder Chrom und Verbindungen oder Oxid von P, B oder Si umfasst, ausgewählte ist.

10. Ein negatives Elektrodenmaterial, das ein negatives aktives Material, ein Bindemittel und ein leitfähiges Mittel aufweist, wobei das negative aktive Material ein negatives aktives Material ist, das gemäß dem Verfahren gemäß einem der Ansprüche 1 bis 13 hergestellt wird.

11. Das negative Elektrodenmaterial gemäß Anspruch 10, bei dem das negative aktive Material zinnhaltige Partikel mit einer durchschnittlichen Partikelgröße von etwa 20-200 nm aufweist.

12. Das negative Elektrodenmaterial gemäß Anspruch 10 oder 11, bei dem das negative aktive Material zumindest ein zinnhaltiges Partikel aufweist, das aus der Gruppe, die Zinn, Zinnlegierung, Zinnoxid und Zinnlegierung-Oxid umfasst, ausgewählt ist.

13. Das negative Elektrodenmaterial gemäß Anspruch 12, bei dem das Zinnlegierung-Oxid eine Formel $SnO_x$-$M_1O_y$-$M_2O_z$, aufweist, in der $0<x\leq3$, $0<y\leq3$, $0<z\leq3$, $M_1$ zumindest ein aus der Gruppe, die Ag, Zn, Sb, Al und Pb umfasst, ausgewähltes ist, und $M_2$ zumindest ein aus der Gruppe, die Co, Ni, Cu, Fe, Cr, P, Be und Si umfasst, ausgewähltes ist.

14. Das negative Elektrodenmaterial gemäß einem der Ansprüche 10 bis 14, bei dem das Bindemittel zumindest ein aus der Gruppe, die Natriumcarboxymethylcellulose, Polyvinylidenfluorid, Polytetrafluorethylen, Polyethylen, Polypropylen, Ethylen-Propylen-Dien-Terpolymer, sulfoniertes Ethylen-Propylen-Dien-Terpolymer, Styrol-Butadien-Kautschuk und Fluorkautschuk umfasst, ausgewähltes ist und das Gewichtsverhältnis des negativen aktiven Materials zu dem Bindemittel bei etwa (5-50):1 liegt.

15. Eine Lithiumionenbatterie, die folgende Merkmale aufweist:

    eine Hülle;
    einen Elektrodenkern, der in der Hülle untergebracht ist;

eine Abdecktafel zum Versiegeln der Hülle; und
einen Elektrolyt, der in der Hülle angeordnet ist;

wobei
der Elektrodenkern eine Positive-Elektrode-Platte, eine Negative-Elektrode-Platte und einen Separator aufweist, der zwischen der Positive-Elektrode-Platte und der Negative-Elektrode-Platte angeordnet ist;
die Positive-Elektrode-Platte einen Positiver-Strom-Kollektor und ein Positive-Elektrode-Material, mit dem der Positiver-Strom-Kollektor beschichtet ist, aufweist; und
die Negative-Elektrode-Platte einen Negativer-Strom-Kollektor und ein Negative-Elektrode-Material, mit dem der Negativer-Strom-Kollektor beschichtet ist, aufweist;
wobei
das Negative-Elektrode-Material das Negative-Elektrode-Material gemäß einem der Ansprüche 10 bis 14 ist.

## Revendications

1.  Procédé de préparation d'un matériau actif négatif, comprenant le fait de:

    A) mélanger un matériau à base de carbone, un polymère organique et une solution aqueuse d'un composé contenant du Sn, pour obtenir un premier mélange;
    B) ajouter un agent complexant au premier mélange tout en agitant, pour obtenir un deuxième mélange;
    C) ajouter un agent réducteur au deuxième mélange, pour faire réagir et obtenir un produit de réaction; et
    D) filtrer, laver et ensuite sécher le produit de réaction, pour obtenir le matériau actif négatif.

2.  Procédé selon la revendication 1, comprenant par ailleurs une étape consistant à fritter le matériau actif négatif obtenu sous vide ou sous une atmosphère protectrice, et le frittage est réalisé à une température d'environ 300°C à environ 900°C.

3.  Procédé selon l'une quelconque des revendications précédentes, comprenant par ailleurs une étape consistant à activer le matériau à base de carbone avant l'étape A), et l'étape d'activation comprend le fait de:

    mélanger le matériau à base de carbone avec une solution d'acide, tout en agitant, pour obtenir un mélange et ensuite chauffer le mélange à une température d'environ 60°C à environ 100°C pendant d'environ 2 heures à 5 heures.

4.  Procédé selon la revendication 3, dans lequel,
    à l'étape C), la température de réaction est d'environ 70°C à environ 90°C; et
    à l'étape D), le produit de réaction est filtré par succion et lavé avec de l'eau déminéralisée, et puis séché sous vide à environ 80 à 100°C.

5.  Procédé selon la revendication 4, dans lequel
    le matériau à base de carbone est au moins l'un sélectionné parmi le groupe constitué de graphite naturel, de graphite artificiel, de carbone dur et de microbille de méso-carbone et le graphite naturel ou le graphite artificiel est du graphite sphérique ou de graphite en flocons;
    la solution acide est au moins l'un sélectionné parmi le groupe composé d'acide chlorhydrique, d'acide sulfurique et d'acide nitrique;
    le polymère organique est au moins l'un sélectionné parmi le groupe composé d'asphalte, de polyoxyéthylène-polyoxypropylène-polyoxyéthylène, de fluorure de polyvinylidène et de polytétrafluoréthylène; et
    le composé contenant du Sn est au moins l'un sélectionné parmi le groupe composé de sulfate stannique, de chlorure stannique, de sulfate stanneux et de chlorure stanneux,
    dans lequel, dans le premier mélange, le rapport en poids entre le matériau à base de carbone, le polymère organique et le composé contenant du Sn est d'environ (1 à 4): (0,1 à 0,4): 1.

6.  Procédé selon la revendication 1, dans lequel l'agent complexant est au moins l'un sélectionné parmi le groupe composé d'acide citrique, d'acide tartrique, de tétra-acétate de sodium-éthylène-diamine et de succinate de sodium; et, dans le deuxième mélange, le rapport en poids entre l'agent complexant et le composé contenant du Sn est d'environ (0,8 à 3): 1; et
    l'agent réducteur est au moins l'un sélectionné parmi le groupe composé de borohydrure de sodium, d'acétaldéhyde, de formaldéhyde et d'hypophosphite de sodium; et, dans le deuxième mélange, le rapport en poids entre l'agent réducteur et le composé contenant du Sn est d'environ (2,7 à 6): 1.

7. Procédé selon l'une quelconque des revendications précédentes, dans lequel le premier mélange comprend par ailleurs un premier composé assistant soluble dans l'eau ou un deuxième composé assistant soluble dans l'eau, dans lequel le premier composé assistant soluble dans l'eau comprend au moins un élément assistant sélectionné parmi le groupe composé d'Ag, de Zn, d'Al, et de Sb; et le deuxième composé assistant soluble dans l'eau comprend au moins un élément assistant sélectionné parmi le groupe composé de Co, de Ni, de Cu, de Cr, de Fe, de P, de Si et de B,

dans le premier mélange, le rapport en poids entre le premier additif composé assistant soluble dans l'eau et le composé contenant du Sn est d'environ (0,04 à 0,2): 1, et, dans le premier mélange, le rapport en poids entre le deuxième composé assistant soluble dans l'eau et le composé contenant du Sn est d'environ (0,04 à 0,2): 1.

8. Procédé selon la revendication 7, comprenant le fait de:

mélanger le matériau à base de carbone avec au moins une solution d'acide sélectionnée parmi le groupe composé d'acide chlorhydrique, d'acide sulfurique et d'acide nitrique, pour obtenir un mélange, et chauffer le mélange à environ 60°C à 100°C pendant environ 2 heures à environ 5 heures pour traiter le matériau à base de carbone, et filtrer et sécher le matériau à base de carbone, pour obtenir le matériau à base de carbone traité;
mélanger le matériau à base de carbone traité avec le polymère organique, et ensuite ajouter le composé contenant du Sn et les premier et deuxième composés assistants solubles dans l'eau, pour obtenir le premier mélange;
ajouter l'agent complexant au premier mélange, pour obtenir un deuxième mélange;
ajouter l'agent réducteur au deuxième mélange à une température d'environ 70°C à 90°C, pour faire réagir et obtenir le produit de réaction;
filtrer par succion le produit de réaction et laver le produit de réaction avec de l'eau déminéralisée, et ensuite sécher le produit de réaction à environ 80 à 100°C sous vide; et
fritter le produit de réaction à environ 300 à 900°C sous vide ou sous une atmosphère protectrice, pour obtenir le matériau actif négatif.

9. Procédé selon la revendication 7 ou 8, dans lequel
le polymère organique est au moins l'un sélectionné parmi le groupe composé d'asphalte et de polyoxyéthylène-polyoxypropylène-polyoxyéthylène,
le composé contenant du Sn est au moins l'un sélectionné parmi le groupe composé de sulfate stannique et de chlorure stannique;
l'agent complexant est au moins l'un sélectionné parmi le groupe composé d'acide citrique, d'acide tartrique, de tétra-acétate de sodium-éthylène-diamine et de succinate de sodium;
l'agent réducteur est au moins l'un sélectionné parmi le groupe composé de borohydrure de sodium, d'acétaldéhyde, de formaldéhyde et d'hypophosphite de sodium;
le premier composé assistant soluble dans l'eau est au moins l'un sélectionné parmi le groupe composé de sulfate, de chlorure et de nitrate de zinc ou d'aluminium; et
le deuxième composé assistant soluble dans l'eau est au moins l'un sélectionné parmi le groupe composé de sulfate, de chlorure et de nitrate de cobalt, de nickel, de fer ou de chrome et de composés ou oxyde de P, B ou Si.

10. Matériau d'électrode négatif comprenant un matériau actif négatif, un agent liant et un agent conducteur, dans lequel le matériau actif négatif est un matériau actif négatif préparé selon le procédé selon l'une quelconque des revendications 1 à 13.

11. Matériau d'électrode négatif selon la revendication 10, dans lequel le matériau actif négatif comprend des particules contenant de l'étain avec une grosseur de particule moyenne d'environ 20 à 200 nm.

12. Matériau d'électrode négatif selon la revendication 10 ou 11, dans lequel le matériau actif négatif comprend au moins une particule contenant de l'étain sélectionnée parmi le groupe composé d'étain, d'alliage d'étain, d'oxyde d'étain et d'oxyde d'alliage d'étain.

13. Matériau d'électrode négatif selon la revendication 12, dans lequel l'oxyde d'alliage d'étain présente une formule de $SnO_x-M_1O_y-M_2O_z$, où $0<x\leq3$ $0<y\leq3$, $0<z\leq3$, $M_1$ est au moins l'un sélectionné parmi le groupe composé d'Ag, de Zn, de Sb, d'Al et de Pb, et $M_2$ est au moins l'un sélectionné parmi le groupe composé de Co, de Ni, de Cu, de Fe, de Cr, de P, de Be et de Si.

**14.** Matériau d'électrode négatif selon l'une quelconque des revendications 10 à 14, dans lequel l'agent liant est au moins l'un sélectionné parmi le groupe composé de carboxyméthylcellulose de sodium, de fluorure de polyvinylidène, de polytétrafluoroéthylène, de polyéthylène, de polypropylène, d'éthylène-propylène-diène, d'éthylène-propylène-diène sulfoné, de caoutchouc et caoutchouc fluoré de styrène/butadiène, et le rapport en poids entre le matériau actif négatif et l'agent liant est d'environ (5 à 50): 1.

**15.** Batterie au lithium-ion, comprenant:

une coquille;
un noyau d'électrode logé dans la coquille;
une plaque de couverture pour sceller la coquille; et
un electrolyte disposé dans la coquille;

dans laquelle

le noyau d'électrode comprend une plaque d'électrode positive, une plaque d'électrode négative et un séparateur disposé entre la plaque d'électrode positive et la plaque d'électrode négative;
la plaque d'électrode positive comprend un collecteur de courant positif et un matériau d'électrode positif revêtu sur le collecteur de courant positif; et
la plaque d'électrode négative comprend un collecteur de courant négatif et un matériau d'électrode négatif revêtu sur le collecteur de courant négatif;

dans lequel
le matériau d'électrode négatif est un matériau d'électrode négatif selon l'une quelconque des revendications 10 à 14.

Fig. 1a

Fig. 1b

Fig. 1c

Fig. 2a

S4800 5.0kV 7.5mm x10.0k SE(U) 5/25/2010          5.00um

Fig. 2b

Fig. 2c

Fig. 3a

Fig. 3b

Fig. 3c

Fig. 4

Fig. 5

Fig. 6

Fig. 7

Fig. 8

Fig. 9

Fig. 10

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101740764 A